# NEUE EUROPÄISCHE PATENTSCHRIFT

(11) **EP 3 096 372 B2**
(45) Veröffentlichungstag und Bekanntmachung des Hinweises auf die Entscheidung über den Einspruch: **23.06.2021**
(45) Hinweis auf die Patenterteilung: 11.07.2018
(21) Anmeldenummer: 16000925.4
(22) Anmeldetag: 23.04.2016
(51) Int. Cl.: H01M 2/10, H01M 2/20

(54) **BATTERIE-SPEICHERMODUL UND BATTERIE-SPEICHERSYSTEM**
BATTERY MODULE AND BATTERY SYSTEM
MODULE DE BATTERIE ET SYSTEME DE BATTERIE

(30) Priorität: 02.05.2015 DE 102015005529
(43) Veröffentlichungstag der Anmeldung: 23.11.2016
(73) Patentinhaber: Raiffeisenlandesbank Oberösterreich Aktiengesellschaft, 4020 Linz (AT)
(72) Erfinder: Kreisel, Phillip, A-4240 Freistadt (AT); Kreisel, Johann, A-4240 Freistadt (AT); Kreisel, Markus, A-4240 Freistadt (AT)
(74) Vertreter: Hübscher & Partner Patentanwälte GmbH

(56) Entgegenhaltungen:
- EP-A1- 0 834 943
- EP-A1- 2 555 280
- EP-A2- 1 058 332
- EP-A2- 1 058 332
- WO-A2-2010/059957
- WO-A2-2013/126340
- CN-U- 202 549 964
- CN-Y- 201 402 838
- DE-A1- 10 113 128
- GB-A- 2 309 128
- US-A- 3 923 549
- US-A1- 2012 231 320
- US-A1- 2012 231 320

## Beschreibung

Die Erfindung betrifft ein Batterie-Speichermodul mit einer Mehrzahl von Batterie-Einzelzellen sowie ein Batterie-Speichersystem mit einer Mehrzahl derartiger Batterie-Speichermodulen.

Batterie-Speichermodule sind beispielsweise bekannt aus der Druckschrift DE 10 2013 213 550 A1. Batteriesysteme, insbesondere für die Verwendung in elektrisch angetriebenen Fahrzeugen, unterliegen besonderen Voraussetzungen, wie beispielsweise das Minimieren des Raumgewichts bei einer maximal möglichen Leistung. Zudem ist eine flexible Gestaltung möglicher Batteriesysteme von Vorteil, um eine hohe Varianz in den Fertigungsprozessen zu erzeugen. Eine gleichmäßige thermische und elektrische Belastung der Einzelzellen ist Voraussetzung für ein optimiertes Batteriesystem. Auch ist es vorteilhaft, wenn sich Einzelzellen des Batteriesystems zum Beispiel bei einem Unfall eines Fahrzeugs weitgehend aus ihrem elektrischen Systemverbund lösen lassen. Dadurch kann unter anderem die Sicherheit derartiger Batteriesysteme erhöht werden, da unter anderem die chemische Reaktionsfähigkeit des Batteriesystems auf die jeweiligen Einzelzellen beschränkt ist.

Aus der Druckschrift EP 2 555 280 A1 ist dem Fachmann beispielsweise ein Batterie-Speichersystem bekannt, dessen einzelne Batterie-Speichermodule über Muttern verbunden sind.

Aus der Druckschrift GB 2 309 128 A ist dem Fachmann eine Kontaktfeder bekannt, die zur elektrischen Kontaktierung je einer Batterie-Einzelzelle über dort offenbarte Haltearme dienen.

Es ist Aufgabe der vorliegenden Erfindung, ein Batterie-Speichersystem sowie ein Batterie-Speichermodul anzugeben, das sich durch eine flexible Gestaltung und/oder durch eine gleichmäßige thermische und elektrische Belastung ihrer Einzelzellen und/oder durch eine erhöhte Sicherheit auszeichnet.

Diese Aufgaben werden unter anderem durch ein Batterie-Speichermodul mit den Merkmalen des Anspruchs 1 und durch ein Batterie-Speichersystem mit den Merkmalen des Anspruchs 4 gelöst. Vorteilhafte Weiterbildungen des Batterie-Speichermoduls und des Batterie-Speichersystems sind Gegenstand der abhängigen Ansprüche.

Gemäß zumindest einer Ausführungsform ist ein Batterie-Speichermodul aufweisend eine Mehrzahl von Batterie-Einzelzellen mit je einem Minuspol und je einem an einer gegenüberliegenden Seite des Minuspols angeordneten Pluspol, eine Grundplatte und eine Parallelplatte angegeben. Die Grundplatte weist eine Mehrzahl von Aufnahmebereichen auf, die jeweils zur Aufnahme einer Batterie-Einzelzelle vorgesehen sind. Je eine Batterie-Einzelzelle ist mit ihrem Minuspol in je einem Aufnahmebereich der Grundplatte angeordnet. An einer von der Grundplatte abgewandten Seite der Mehrzahl der Batterie-Einzelzellen ist die Parallelplatte auf den Batterie-Einzelzellen angeordnet, die zur Kontaktierung der Batterie-Einzelzellen am Pluspol vorgesehen ist. An einer von den Batterie-Einzelzellen abgewandten Seite der Parallelplatte ist je eine jeweils mittels eines Laserschweißverfahrens unlösbar und elektrisch leitfähig mit der Parallelplatte verbundene Kontaktfeder pro Batterie-Einzelzelle angeordnet. Die Kontaktfeder ist jeweils so ausgeformt, dass sie über Federarme eine Aufnahmeeinheit für eine weitere, darüber positionierte Batterie-Einzelzelle bietet. Die Parallelplatte weist im Bereich der Batterie-Einzelzellen Durchbrüche auf, sodass die jeweiligen Pluspole der Batterie-Einzelzelle hindurch reichen können, wobei die Kontaktfeder jeweils mit einem Pluspol der zugehörigen Batterie-Einzelzelle unlösbar mittels eines Laserschweißverfahrens verbunden ist.

Mit Vorteil können die Batterie-Speichermodule je nach der gewünschten Anforderung beziehungsweise Anwendung flexibel in ihrer Anzahl und Anordnung der Batterie-Einzelzellen ausgebildet sein. Dabei weisen die einzelnen Batterie-Speichermodule jeweils den gleichen Grundaufbau sowie elektrische Kontaktierung auf, insbesondere mit der Grundplatte und der Parallelplatte. Gleichzeitig kann der Aufbau der Batterie-Speichermodule betreffend die Anzahl der Batterie-Einzelzellen entsprechend des jeweiligen Einsatzfalls ausgebildet sein. Zur Verfügung stehende Bauräume können so flexibel ausgenutzt und beliebige Leistungsklassen ausgebildet werden, ohne dabei eine hohe Varianz in den Fertigungsprozessen zu erzeugen. Ein leicht erzeugbares, schnell zu montierendes modulares Batterie-Speichersystem ermöglicht sich so mit Vorteil.

Insgesamt kann durch das Batterie-Speichermodul ein minimales Leistungsgewicht beziehungsweise Raumgewicht bei maximal möglicher Leistung ermöglicht werden. Die Energiedichte des Batterie-Speichermoduls kann so mit Vorteil maximal ausgelegt werden.

Durch die elektrische Kontaktierung aller Batterie-Einzelzellen über die Grundplatte und die Parallelplatte werden die Batterie-Einzelzellen elektrisch und thermisch weitestgehend gleichmäßig belastet, wodurch eine übermäßige Stressung einzelner Batterie-Einzelzellen und damit verbunden ein vorzeitiger Ausfall dieser Batterie-Einzelzellen vermieden werden kann.

Mit dem erfindungsgemäßen Aufbau und der speziellen Anordnung der Batterie-Einzelzellen in dem Batterie-Speichermodul bietet sich vorteilhafterweise die Möglichkeit zur industriellen Automatisierung.

Vorteilhafterweise lassen sich im Falle einer mechanischen Beschädigung des Batterie-Speichermoduls, zum Beispiel bei einem Unfall eines Fahrzeuges, in dem das Batterie-Speichermodul verbaut ist, die Batterie-Einzelzellen schnell und problemlos weitgehend aus dem elektrischen Systemverbund lösen. So kann die elektrische Kapazität reduziert werden und damit die chemische Reaktionsfähigkeit des Systems auf bestimmte Batterie-Einzelzellen beschränkt werden. Dies ist insbesondere bei der Verwendung von üblichen Lithium-Ionen Batterie-Einzelzellen ein wichtiger Sicherheitsfaktor, da das Zelleninnere bei Sauerstoffkontakt eine explosionsartige Reaktion aufzeigen kann. Auch im Falle eines Kurzschlusses ist eine Batterie-Einzelzelle aus dem Zellverbund trennbar, womit eine weitere Überhitzung dieser Batterie-Einzelzelle mit Vorteil verhindert werden kann.

Unter Batterie-Einzelzelle wird vorliegend eine wiederaufladbare Akkumulatorzelle, insbesondere Sekundärzelle, verstanden.

Die elektrische Verschaltung der Batterie-Einzelzellen erfolgt vorliegend über die Grundplatte und die Parallelplatte.

Die Batterie-Einzelzellen sind vorzugsweise jeweils Rundzellen vom Typ 18650 (Durchmesser 18 mm, Höhe 65 mm). Natürlich ist es für den Fachmann offensichtlich, dass auch andere Rundzellen vergleichbarer Konstruktionen, beispielsweise mit abweichendem Durchmesser und/oder Bauhöhe, verwendbar sind.

Die Grundplatte weist vorzugsweise Kunststoff auf beziehungsweise besteht hieraus. Bevorzugt bietet die Grundplatte über Stecköffnungen die Möglichkeit, Batterie-Einzelzellen mittels einer Übergangspassung zueinander präzise zu positionieren und auszurichten. Die Aufnahmebereiche der Grundplatte sind beispielsweise als Sacklöcher ausgeformt, die einen Tiefenanschlag beim Einstecken der jeweiligen Batterie-Einzelzelle bieten kann. Beispielsweise können auf einer Grundplatte 61 Stück Batterie-Einzelzellen mit jeweils 2,9 Ah zu einem Batterie-Speichermodul mit 176,9 Ah zusammengefügt werden. Die Grundplatte erfüllt darüber hinaus die Funktion der mechanischen Stabilität des Batterie-Speichermoduls.

Die Parallelplatte weist vorzugsweise einen elektrisch hochleitfähigen Kontaktwerkstoff auf oder besteht hieraus. Beispielsweise ist der Kontaktwerkstoff ein Werkstoff mit einem hohen Kupferanteil. Erfindungsgemäß weist die Parallelplatte im Bereich von Zellköpfen der Batterie-Einzelzellen runde Durchbrüche auf, sodass die jeweiligen Pluspole der Batterie-Einzelzellen konzentrisch hierzu durchreichen können.

Erfindungsgemäß ist an einer von den Batterie-Einzelzellen abgewandten Seite der Parallelplatte je eine Kontaktfeder pro Batterie-Einzelzelle angeordnet. Bevorzugt ist die Kontaktfeder jeweils mit dem Pluspol der zugehörigen Batterie-Einzelzelle elektrisch leitfähig verbunden. Die Kontaktfeder ist dabei jeweils mittels eines Laserschweißverfahrens unlösbar und elektrisch leitfähig mit der Parallelplatte verbunden.

Auf der Parallelplatte sind also pro Batterie-Einzelzellen-Kopf Kontaktfedern derart aufgebracht, dass die Kontaktfedern eine mechanisch feste, elektrisch leitfähige und unlösbare Verbindung eingehen. Hierzu findet ein Laserschweißverfahren Anwendung. Die Kontaktfedern sind erfindungsgemäß jeweils zusätzlich mit dem jeweiligen Pluspol der zugehörigen Batterie-Einzelzelle ebenfalls unlösbar mittels dem Laserschweißverfahren verbunden. Dies gewährleistet eine feste Positionierung der jeweiligen Batterie-Einzelzelle in axialer Richtung mittels einer bevorzugt leichten Klemmung über die Grundplatte.

Erfindungsgemäß ist an einer von der Parallelplatte abgewandten Seite der Kontaktfeder jeweils eine Aufnahmeeinheit zur Aufnahme einer weiteren Batterie-Einzelzelle mit ihrem Minuspol ausgebildet. Die Kontaktfeder bietet erfindungsgemäß über ausgelegte Federarme eine Aufnahmeeinheit für einen weitere, darüber zu positionierende Batterie-Einzelzelle. Der Innendurchmesser ist dabei derart dimensioniert, dass aufgrund eines geringeren Untermaßes im Umfang des Innenkreises der Federarme die eingesteckte Batterie-Einzelzelle über eine Rückstellkraft gefasst ist und der elektrische Kontakt zu einer Außenhülle, insbesondere dem Minuspol der aufgesteckten Batterie-Einzelzelle, hergestellt ist.

Durch die elektrische Kontaktierung aller Batterie-Einzelzellen über den Verbund von Kontaktfedern und Grundplatte werden die Batterie-Einzelzellen elektrisch und thermisch gleichmäßig belastet. Über eine spezielle Lochgeometrie in der jeweiligen Kontaktfeder rund um eine Verbindungsgeometrie zur Anode der Batterie-Einzelzelle wird der leitende Querschnitt insoweit beeinflussend ausgelegt, dass bei einem Kurzschluss der Batterie-Einzelzelle im Fehlerfall die leitenden Querschnitte schnell durch Überhitzung abschmelzen und so die Batterie-Einzelzelle elektrisch aus dem Verbund gelöst wird.

Gemäß zumindest einer Ausführungsform wird ein Batterie-Speichersystem mit einer Mehrzahl von Batterie-Speichermodulen angegeben, wobei die elektrische Vernetzung der Batterie-Speichermodule untereinander mittels der Kontaktfedern kabellos und lösbar ist. Damit verfügt das Batterie-Speichersystem mit Vorteil über keine fehleranfällige und aufwendige Verkabelung. Im Falle einer mechanischen impulsartigen Belastung des Batterie-Speichersystems können sich die einzelnen Batterie-Speichermodule voneinander trennen, wodurch der Stromkreis unterbrochen ist und keine weitere Energie dem Batterie-Speichersystem entnommen wird.

Die in Verbindung mit dem Batterie-Speichermodul erläuterten Vorteile und Merkmale finden selbstverständlich auch bei dem Batterie-Speichersystem Anwendung, und umgekehrt.

Gemäß zumindest einer Ausführungsform sind die Batterie-Speichermodule mittels der Kontaktfedern über ein Stecksystem miteinander mechanisch und elektrisch leitfähig verbunden. Dadurch können die einzelnen Batterie-Speichermodule vorteilhafterweise nach gleichem Grundaufbau erzeugt werden und spezifisch für den jeweiligen Einzelfall miteinander verkettet beziehungsweise aneinander gesteckt werden. Beliebige Leistungsklassen können so ausgebildet werden. Eine industriell automatisierte Fertigung von Batterie-Speichersystemen ermöglicht sich so mit Vorteil.

Gemäß zumindest einer Ausführungsform sind die Batterie-Speichermodule zumindest teilweise übereinander gestapelt angeordnet, sodass eine obere Grundplatte eines oberen Batterie-Speichermoduls zwischen Kontaktfedern eines unteren Batterie-Speichermoduls mit zugehöriger Parallelplatte und Batterie-Einzelzellen des oberen Batterie-Speichermoduls geklemmt ist.

Ein beispielsweise baugleiches Batterie-Speichermodul mit insbesondere identischer Anordnung der Batterie-Einzelzellen kann so über eine Steckung zu einem benachbarten Batterie-Speichermodul sicher in Position gebracht sein. Die Minuspole aller Batterie-Einzelzellen sind dabei mit einem zugehörigen Batterie-Einzelzellen-Nachbarn des benachbarten Batterie-Speichermoduls auf dessen Pluspol gesteckt, wodurch eine serielle elektrische Verkettung der Batterie-Einzelzellen und damit der Batterie-Speichermodule entsteht. Die Parallelplatte erzeugt dabei die Gleichstellung des elektrischen Potentials aller Batterie-Einzelzellen.

Gemäß zumindest einer Ausführungsform sind zwei benachbarte Batterie-Speichermodule über Gewindebolzen mechanisch miteinander verbunden. Insbesondere werden zur zusätzlichen mechanischen Stabilisierung der Batterie-Speichermodule die Gewindebolzen von vorzugsweise identischer Länge der Batterie-Einzelzellen über die Grundplatte mit einem Gewindebolzen des benachbarten Batterie-Speichermoduls verschraubt.

Gemäß zumindest einer Ausführungsform sind zur externen elektrischen Kontaktierung auf äußeren Batterie-Speichermodulen ein Kontaktierungswinkel und elektrisch leitfähige Distanzhülsen zum Eingriff in jede Kontaktfeder eines darunter liegenden Batterie-Speichermoduls angeordnet. Den Abschluss zur elektrischen Kontaktierung der addierten Batterie-Speichermodule bildet demnach eine äußere Parallelplatte, auf die der Kontaktierungswinkel auf ihrer freien Seite und die bevorzugt modulseitig elektrisch leitfähigen Distanzhülsen zum Eingriff in jede Kontaktfeder des darunter liegenden Batterie-Speichermoduls vorzugsweise aufgeschweißt sind.

Gemäß zumindest einer Ausführungsform findet das Batterie-Speichermodul beziehungsweise Batterie-Speichersystem Verwendung in einem elektrisch angetriebenen Fahrzeug, insbesondere einem Auto.

Weitere Vorteile und vorteilhafte Weiterbildungen der Erfindung ergeben sich aus dem im Folgenden in Verbindung mit den Figuren beschriebenen Ausführungsbeispielen. Es zeigen:
Figuren 1A bis 1C
   jeweils eine schematische Ansicht eines Ausführungsbeispiels eines erfindungsgemäßen Batterie-Speichersystems,
Figuren 2A und 2B
   jeweils eine schematische Ansicht eines Ausführungsbeispiels einer Verbindung erfindungsgemäßer Batterie-Speichermodule,
Figuren 3A bis 3C
   jeweils eine schematische Ansicht eines Ausführungsbeispiels einer Grundplatte eines erfindungsgemäßen Batterie-Speichermoduls,
Figuren 4A und 4B
   jeweils eine schematische Ansicht eines Ausführungsbeispiels einer Parallelplatte eines erfindungsgemäßen Batterie-Speichermoduls,
Figuren 5A bis 5E
   jeweils eine schematische Ansicht eines Ausführungsbeispiels einer Kontaktfeder eines erfindungsgemäßen Batterie-Speichermoduls, und
Figuren 6A bis 6D
   jeweils eine schematische Ansicht eines Ausführungsbeispiels einer Anordnung von Batterie-Einzelzellen eines erfindungsgemäßen Batterie-Speichermoduls.

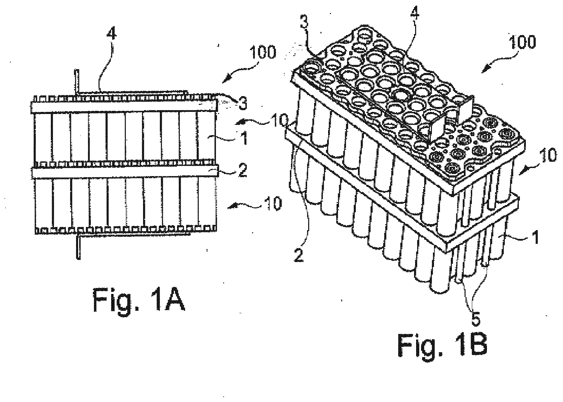

Figuren 1A bis 1D stellen jeweils verschiedene Ansichten eines Ausführungsbeispiels eines Batterie-Speichersystems 100 dar, das zwei Batterie-Speichermodule 10 umfasst, die übereinander gestapelt angeordnet sind. Die Batterie-Speichermodule 10 weisen jeweils eine Mehrzahl von Batterie-Einzelzellen 1 auf, die pro Batterie-Speichermodul 10 benachbart zueinander beziehungsweise lateral nebeneinander angeordnet sind. Die Batterie-Einzelzellen 1 sind jeweils Rundzellen vom Typ 18650 mit einem Durchmesser von 18 mm und einer Höhe von 65 mm. Natürlich sind auch andere Rundzellen vergleichbarer Konstruktionen mit einem abweichenden Durchmesser beziehungsweise Bauhöhe verwendbar.

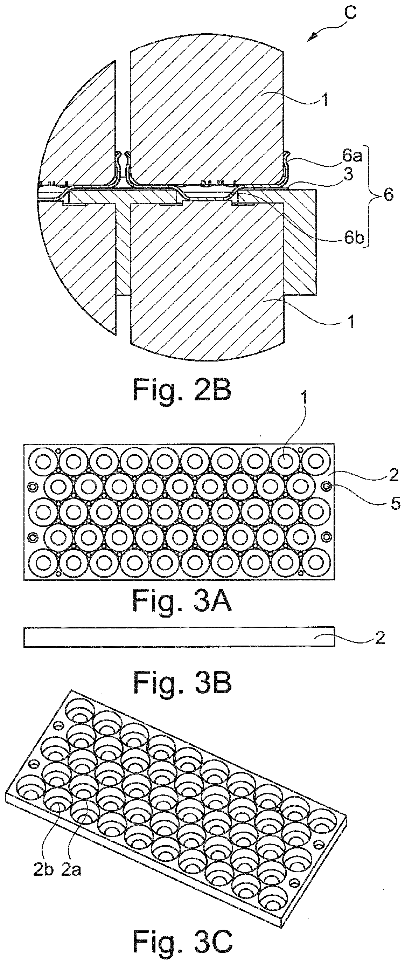

Die Batterie-Einzelzellen 1 werden pro Batterie-Speichermodul 10 über eine Grundplatte 2, insbesondere eine Kunststoff-Platte, in einer definierten Anordnung zu dem Batterie-Speichermodul 10 zusammengeschlossen. Die Anzahl der Batterie-Einzelzellen 1 bestimmt dabei die Leistung des Batterie-Speichermoduls. Beispielsweise können 61 Stück Batterie-Einzelzellen 1 mit jeweils 2,9 Ah zu einem Batterie-Speichermodul 10 mit 176,9 Ah zusammengefügt sein. Die Grundplatte 2 erfüllt unter anderem die Funktion der mechanischen Stabilität des jeweiligen Batterie-Speichermoduls 10. Die Grundplatte 2 ist in Verbindung mit den Figuren3A bis 3C näher erläutert.

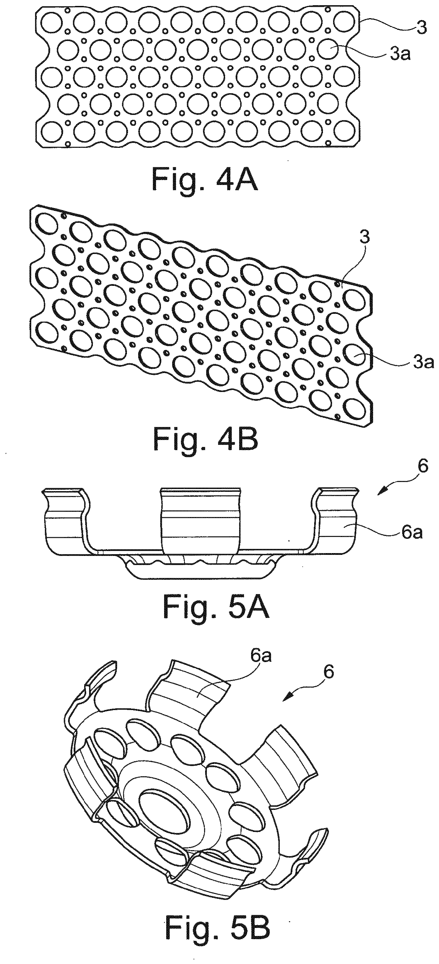

Auf einer Gegenseite der Batterie-Einzelzellen 1 eines jeden Batterie-Speichermoduls 10 ist jeweils eine Parallelplatte 3 angeordnet, die aus einem elektrisch hochleitfähigem Kontaktwerkstoff besteht, beispielsweise einem Werkstoff mit einem hohen Kupferanteil. Die Parallelplatte 3 ist in Zusammenhang mit den Figuren 4A und 4b detailliert beschrieben.

Einen Abschluss zur elektrischen Kontaktierung der addierten Batterie-Speichermodule 10 bildet eine äußere Parallelplatte 3, auf die jeweils ein Kontaktierungswinkel 4 auf der freien Seite und modulseitige Distanzhülsen (nicht dargestellt) zum Eingriff in das darunterliegende Batterie-Speichermodul 10 aufgeschweißt sind.

Zur zusätzlichen mechanischen Stabilisierung der Batterie-Speichermodule 10 finden vorliegend vier Gewindebolzen 5 von identischer Länge der Batterie-Einzelzellen 1 Verwendung, die über die Grundplatte 2 mit einem Gewindebolzen 5 des Nachbar-Batterie-Speichermoduls 10 verschraubt sind.

Zur weiteren mechanischen und elektrischen Verbindung der einzelnen Batterie-Speichermodule 10 finden Kontaktfedern 6 Verwendung, deren Anordnung in Verbindung mit den Figuren 2A und 2B näher dargestellt ist. Figur 2B zeigt dabei einen Ausschnitt C des Batterie-Speichersystems 100 der Figur 2A.

Auf die jeweilige Parallelplatte 3 pro Batterie-Einzelzelle 1 ist je eine Kontaktfeder 6 so aufgebracht, dass die Parallelplatte 3 und die Kontaktfeder 6 eine mechanisch feste, leitfähige und unlösbare Verbindung eingehen. Hierzu ist ein Laserschweißverfahren angewendet. Die Kontaktfeder 6 ist darüber hinaus mit einem Pluspol der zugehörigen Batterie-Einzelzelle 1 unlösbar mittels eines Laserschweißverfahrens verbunden. Dies gewährleistet eine feste Positionierung der Batterie-Einzelzelle 1 in axialer Richtung mittels leichter Klemmung über die jeweilige Grundplatte 2. Die Kontaktfeder 6 ist jeweils so ausgeformt, dass sie über Federarme 6a eine Aufnahmeeinheit für eine weitere, darüber positionierte Batterie-Einzelzelle 1 bietet. Ein Innendurchmesser 6b der Kontaktfeder 6 ist so dimensioniert, dass aufgrund eines geringeren Untermaßes im Umfang des Innenkreises der Federarme 6a die eingesteckte Batterie-Einzelzelle 1 über eine Rückstellkraft gefasst ist und der elektrische Kontakt zu einer Außenhülle, insbesondere ein Minuspol der Batterie-Einzelzelle 1 hergestellt ist.
Ein baugleiches Batterie-Speichermodul 10 mit identischer Anordnung der Batterie-Einzelzellen 1 kann mittels der Kontaktfedern 6 über die Steckung zum Nachbar-Batterie-Speichermodul 10 sicher in Position gebracht werden, sodass die Minuspole aller Batterie-Einzelzellen 1 mit einem zugehörigen Batterie-Einzelzellen-Nachbarn des Nachbar-Batterie-Speichermoduls 10 auf dessen Pluspol gesteckt wird, wodurch eine serielle elektrische Verkettung der Batterie-Einzelzellen 1 und damit der Batterie-Speichermodule 10 entsteht. Die Parallelplatte 3 erzeugt dabei eine Gleichstellung des elektrischen Potenzials aller Batterie-Einzelzellen 1.

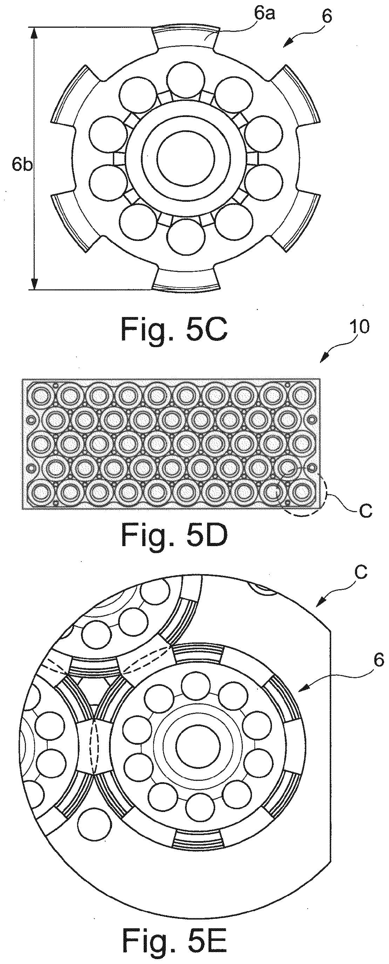

Ein Ausführungsbeispiel einer Kontaktfeder 6, die zur Verwendung eines erfindungsgemäßen Batterie-Speichermoduls oder Batterie-Speichersystems geeignet ist, ist unter anderem in den Figuren 5A bis 5C näher dargestellt. Die Anordnung der Kontaktfedern 6 zueinander eines Batterie-Speichermoduls ist in dem Ausführungsbeispiel der Figuren 5D und 5E gezeigt. Figur 5E stellt dabei einen Ausschnitt C aus Figur 5D näher dar.

Die Figuren 3A bis 3C zeigen verschiedene Darstellungen einer Grundplatte 2, wie sie in einem Batterie-Speichermodul oder Batterie-Speichersystem der Figuren 1A bis 1C, 2A und 2B Verwendung finden kann. Die Grundplatte 2 weist Aufnahmebereiche auf, die über Stecköffnungen die Möglichkeit bieten, die Batterie-Einzelzellen 1 mittels einer Übergangspassung zueinander präzise zu positionieren und auszurichten. Hierbei wird ein Abstand von Batterie-Einzelzelle 1 zu Batterie-Einzelzelle 1 zwischen einschließlich 0,4 mm und 0,6 mm angestrebt. Die Aufnahmebereiche der Grundplatte 2 sind als Sacklöcher 2a ausgeformt, die einen Tiefenanschlag 2b bei Einstecken der jeweiligen Batterie-Einzelzelle 1 bieten.
Die Figuren 4A und 4B zeigen verschiedene Darstellungen einer Parallelplatte 3, wie sie in einem Batterie-Speichermodul oder Batterie-Speichersystem der Figuren 1A bis 1C, 2A und 2B Verwendung finden kann. Die Parallelplatte 3 weist im Bereich der Batterie-Einzelzellen-Köpfe runde Durchbrüche 3a auf, sodass die jeweiligen Pluspole der Batterie-Einzelzelle konzentrisch hierzu durchreichen können.

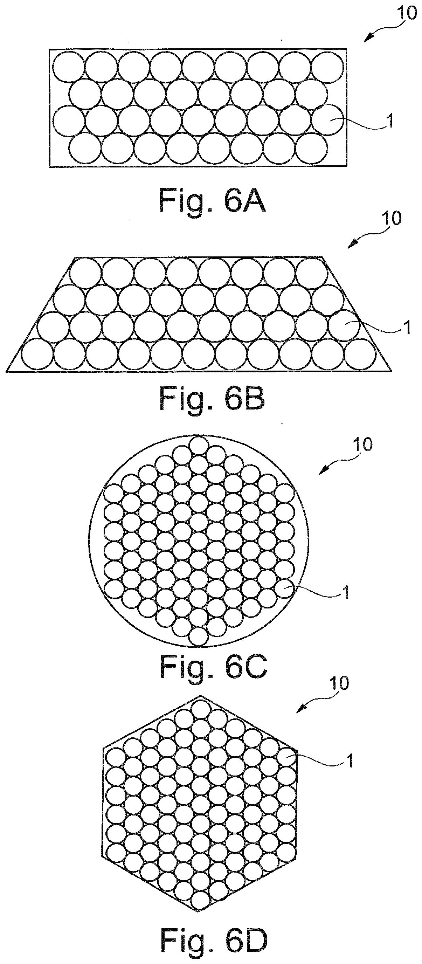

Die Figuren 6A bis 6D zeigen verschiedene mögliche Anordnungen von Batterie-Einzelzellen 1 zu Batterie-Speichermodulen 10, wie sie in einem Batterie-Speichersystem der Figuren 1A bis 1C, 2A und 2B Verwendung finden können. Die Anordnung der Batterie-Einzelzellen 1 der Figur 6A sind reihenförmig zu einer Rechteckform ausgebildet. Figur 6B zeigt eine trapezförmige Anordnung der Batterie-Einzelzellen 1, Figur 6C eine kreisförmige Anordnung der Batterie-Einzelzellen 1. Die Batterie-Einzelzellen der Figur 6D sind hexagonal angeordnet.
Die Erfindung ist nicht durch die Beschreibung anhand der Ausführungsbeispiele auf dieses beschränkt.

## Patentansprüche

1. Batterie-Speichermodul (10) aufweisend eine Mehrzahl von Batterie-Einzelzellen (1) mit je einem Minuspol und je einem an einer gegenüberliegenden Seite des Minuspols angeordneten Pluspol, eine Grundplatte (2) und eine Parallelplatte (3), wobei die Grundplatte (2) eine Mehrzahl von Aufnahmebereichen aufweist, die jeweils zur Aufnahme einer Batterie-Einzelzelle (1) vorgesehen ist, je eine Batterie-Einzelzelle (1) mit ihrem Minuspol in je einem Aufnahmebereich der Grundplatte (2) angeordnet ist, und an einer von der Grundplatte (2) abgewandten Seite der Mehrzahl der Batterie-Einzelzellen (1) die Parallelplatte (3) auf den Batterie-Einzelzellen (1) angeordnet ist, die die Batterie-Einzelzellen (1) am Pluspol kontaktiert, wobei an einer von den Batterie-Einzelzellen (1) abgewandten Seite der Parallelplatte (3) je eine jeweils mittels eines Laserschweißverfahrens unlösbar und elektrisch leitfähig mit der Parallelplatte (3) verbundene Kontaktfeder (6) pro Batterie-Einzelzelle (1) angeordnet ist, **dadurch gekennzeichnet, dass** die Kontaktfeder (6) jeweils so ausgeformt ist, dass sie über Federarme (6A) eine Aufnahmeeinheit für eine weitere, darüber positionierte Batterie-Einzelzelle (1) bietet, wobei die Parallelplatte (3) im Bereich der Batterie-Einzelzellen (1) runde Durchbrüche aufweist, sodass die jeweiligen Pluspole der Batterie-Einzelzelle (1) konzentrisch hindurchreichen können, wobei die Kontaktfeder (6) jeweils mit einem Pluspol der zugehörigen Batterie-Einzelzelle (1) unlösbar mittels eines Laserschweißverfahrens verbunden ist.

2. Batterie-Speichermodul nach Anspruch 1, wobei die Kontaktfeder (6) jeweils mit dem Pluspol der zugehörigen Batterie-Einzelzelle (1) elektrisch leitfähig verbunden ist.

3. Batterie-Speichermodul nach Anspruch 1 oder 2, wobei an einer von der Parallelklappe (3) abgewandten Seite der Kontaktfeder (6) jeweils eine Aufnahmeeinheit zur Aufnahme einer weiteren Batterie-Einzelzelle (1) mit ihrem Minuspol ausgebildet ist.

4. Batterie-Speichersystem (100) mit einer Mehrzahl von Batterie Speichermodulen (10) gemäß einem der vorhergehenden Ansprüche, wobei die elektrische Vernetzung der Batterie-Speichermodule (10) untereinander mittels der Kontaktfedern (6) kabellos und lösbar ist.

5. Batterie-Speichersystem nach Anspruch 4, wobei die Batterie-Speichermodule (10) mittels der Kontaktfedern (6) über ein Stecksystem miteinander mechanisch und elektrisch leitfähig verbunden sind.

6. Batterie-Speichersystem nach Anspruch 4 oder 5, wobei die Batterie-Speichermodule (10) zumindest teilweise übereinandergestapelt angeordnet sind, sodass eine obere Grundklappe (2) eines oberen Batterie-Speichermoduls (10) zwischen Kontaktfedern (6) eines unteren Batterie-Speichermoduls (10) mit zugehöriger Parallelplatte und Batterie-Einzelzellen (1) des oberen Batterie-Speichermoduls (10) geklemmt ist.

7. Batterie-Speichersystem nach einem der Ansprüche 4 bis 6, wobei zwei benachbarte Batterie-Speichermodule (10) über Gewindebolzen (5) mechanisch miteinander verbunden sind.

8. Batterie-Speichersystem nach einem der Ansprüche 1 bis 7, wobei zur externen elektrischen Kontaktierung auf äußeren Batterie Speichermodulen (10) ein Kontaktierungswinkel (4) und elektrisch leitfähige Distanzhülsen zum Eingriff in jede Kontaktfeder (6) eines darunterliegenden Batterie-Speichermoduls (10) angeordnet sind.

## Claims

1. Battery storage module (10) having a plurality of individual battery cells (1) each having a negative pole and each having a positive pole which is arranged on an opposite side to the negative pole, a base plate (2) and a parallel plate (3), wherein the base plate (2) has a plurality of receiving regions which are each provided to receive an individual battery cell (1), a respective individual battery cell (1) is arranged with its negative pole in a respective receiving region of the base plate (2), and, on a side of the plurality of individual battery cells (1) which is averted from the base plate (2), the parallel plate (3) is arranged on the individual battery cells (1) and makes contact with the individual battery cells (1) at the positive pole, wherein, on a side of the parallel plate (3) which is averted from the individual battery cells (1), a respective contact spring (6), which is captively and electrically conductively connected to the parallel plate (3) in each case by means of a laser-welding process, is provided for each individual battery cell (1), **characterized in that** the contact spring (6) is in each case formed such that, by means of spring arms (6a), it provides a receiving unit for a further individual battery cell (1) which is positioned above it, wherein the parallel plate (3) has round apertures in the region of the individual battery cells (1), so that the respective positive poles of the individual battery cell (1) can extend concentrically through, wherein the contact spring (6) is in each case captively connected to a positive pole of the associated individual battery cell (1) by means of a laser-welding process.

2. Battery storage module (10) according to Claim 1, wherein the contact spring (6) is in each case electrically conductively connected to the positive pole of the associated individual battery cell (1).

3. Battery storage module (10) according to either of the preceding Claims 1 and 2, wherein a receiving unit for receiving a further individual battery cell (1) by way of its negative pole is in each case formed on a side of the contact spring (6) which is averted from the parallel plate (3).

4. Battery storage system (100) comprising a plurality of battery storage modules (10) according to one of the preceding claims, wherein the battery storage modules (10) are electrically interconnected by means of the contact springs (6) in a cable-free and releasable manner.

5. Battery storage system (100) according to Claim 4, wherein the battery storage modules (10) are mechanically and electrically conductively connected to one another by means of the contact springs (6) using a plug system.

6. Battery storage system (100) according to one of the preceding Claims 4 and 5, wherein the battery storage modules (10) are arranged at least partially stacked one above the other, so that an upper base plate (2) of an upper battery storage module (10) is clamped between contact springs (6) of a lower battery storage module (10) with an associated parallel plate (3) and individual battery cells (1) of the upper battery storage module (10).

7. Battery storage system (100) according to one of the preceding Claims 4 to 6, wherein two adjacent battery storage modules (10) are mechanically connected to one another by means of threaded bolts (5).

8. Battery storage system (100) according to one of the preceding Claims 1 to 7, wherein, for the purpose of making external electrical contact, a contact-making bracket (4) and electrically conductive spacer sleeves for engaging into each contact spring (6) of a battery storage module (10) situated therebeneath are arranged on outer battery storage modules (10).

## Revendications

1. Module d'accumulation à batterie (10), comprenant une pluralité de cellules individuelles de batterie (1) dotées respectivement d'un pôle négatif et respectivement d'un pôle positif disposé sur un côté opposé au pôle négatif, une plaque de base (2) et une plaque parallèle (3), la plaque de base (2) possédant une pluralité de zones d'accueil qui sont respectivement destinées à accueillir une cellule individuelle de batterie (1), une cellule individuelle de batterie (1) respective étant respectivement disposée avec son pôle négatif dans une zone d'accueil de la plaque de base (2) et la plaque parallèle (3) étant disposée sur les cellules individuelles de batterie (1) sur un côté des cellules individuelles de batterie (1) orienté à l'opposé de la plaque de base (2) et entrant en contact avec les cellules individuelles de batterie (1) au niveau du pôle positif, un ressort de contact (6) par cellule individuelle de batterie (1), respectivement relié à demeure et de manière électriquement conductrice à la plaque parallèle (3) au moyen d'un procédé de soudage au laser, étant respectivement disposé sur un côté de la plaque parallèle (3) qui est orienté à l'opposé des cellules individuelles de batterie (1), **caractérisé en ce que** les le ressort de contact (6) est respectivement façonné de telle sorte qu'il offre, par le biais des bras de ressort (6a) une unité d'accueil pour une cellule individuelle de batterie (1) supplémentaire positionnée au-dessus de celui-ci, la plaque parallèle (3) possédant des traversées rondes dans la zone des cellules individuelles de batterie (1), de sorte que les pôles positifs respectifs des cellules individuelles de batterie (1) peuvent passer concentriquement à travers celle-ci, le ressort de contact (6) étant respectivement relié à demeure à un pôle positif de la cellule individuelle de batterie (1) associée au moyen d'un procédé de soudage au laser.

2. Module d'accumulation à batterie (10) selon la revendication 1, le ressort de contact (6) étant respectivement relié de manière électriquement conductrice au pôle positif de la cellule individuelle de batterie (1) associée.

3. Module d'accumulation à batterie (10) selon l'une des revendications précédentes 1 ou 2, une unité d'accueil destinée à accueillir une cellule individuelle de batterie (1) supplémentaire avec son pôle négatif étant respectivement formée sur un côté du ressort de contact (6) orienté à l'opposé de la plaque parallèle (3).

4. Système d'accumulation à batterie (100) comprenant une pluralité de modules d'accumulation à batterie (10) selon l'une des revendications précédentes, l'interconnexion électrique des modules d'accumulation à batterie (10) entre eux au moyen des ressorts de contact (6) étant sans fil et amovible.

5. Système d'accumulation à batterie (100) selon la revendication 4, les modules d'accumulation à batterie (10) étant reliés entre eux mécaniquement et de manière électriquement conductrice au moyen des ressorts de contact (6) par le biais d'un système d'enfichage.

6. Système d'accumulation à batterie (100) selon l'une des revendications précédentes 4 ou 5, les modules d'accumulation à batterie (10) étant disposés au moins partiellement empilés les uns sur les autres, de sorte qu'une plaque de base (2) supérieure d'un module d'accumulation à batterie (10) supérieur soit coincée entre les ressorts de contact (6) d'un module d'accumulation à batterie (10) inférieur muni de la plaque parallèle (6) associée et les cellules individuelles de batterie (1) du module d'accumulation à batterie (10) supérieur.

7. Système d'accumulation à batterie (100) selon l'une des revendications précédentes 4 à 6, deux modules d'accumulation à batterie (10) voisins étant reliés mécaniquement entre eux par le biais de goujons filetés (5).

8. Système d'accumulation à batterie (100) selon l'une des revendications précédentes 1 à 7, une équerre de mise en contact (4) et des douilles d'écartement électriquement conductrices destinées à venir ne prise dans chaque ressort de contact (6) d'un module d'accumulation à batterie (10) disposé au-dessous étant disposées sur les modules d'accumulation à batterie (10) extérieurs pour l'établissement du contact électrique vers l'extérieur.
